# EUROPÄISCHE PATENTSCHRIFT

(11) **EP 2 419 563 B1**
(45) Veröffentlichungstag und Bekanntmachung des Hinweises auf die Patenterteilung: **07.08.2013**
(21) Anmeldenummer: 10718845.0
(22) Anmeldetag: 27.03.2010
(51) Int. Cl.: F16C 13/02, D21G 1/02

(54) **METALLISCHE WALZE MIT ELASTISCHER OBERFLÄCHE**
METAL ROLL HAVING AN ELASTIC SURFACE
ROULEAU MÉTALLIQUE À SURFACE ÉLASTIQUE

(30) Priorität: 18.04.2009 DE 102009018038
(43) Veröffentlichungstag der Anmeldung: 22.02.2012
(73) Patentinhaber: Gross, Heinz, 64380 Roßdorf (DE)
(72) Erfinder: Gross, Heinz, 64380 Roßdorf (DE)
(74) Vertreter: Katscher Habermann Patentanwälte
(86) Internationale Anmeldenummer: PCT/DE2010/000363
(87) Internationale Veröffentlichungsnummer: WO 2010/118726

(56) Entgegenhaltungen:
- DE-A1-102005 017 184
- US-A- 5 156 086

## Beschreibung

Die Erfindung betrifft eine Walze bestehend aus einem steifen Grundkörper und einem elastischen Mantel, die fest miteinander verbunden sind, bei der der Grundkörper und der Mantel aus einem Metall bestehen und bei der der elastische Mantel einstückig und bereichsweise mehrwandig ist. Weiterhin betrifft die Erfindung Vorrichtungen, in denen erfindungsgemäße Walzen eingebaut sind, sowie Verfahren unter Verwendung von Vorrichtungen mit integrierten Walzen, die nach der Lehre der Erfindung ausgebildet sind.

Werden dünne Bahnen oder geringe Massen durch einen Spalt, der von zwei gegenläufig rotierenden Walzen gebildet wird, gezogen, so ist es verfahrenstechnisch schwierig konstante Kraftverhältnisse im Spalt zu erreichen, da sich der Spalt schon auf Grund der nicht zu vermeidenden Rundlauftoleranzen der beteiligten Walzen und der Fertigungstoleranzen der Lager ständig ändert. Da zusätzlich auch noch die in den Spalt einlaufende Bahn oder Masse in aller Regel keine exakt einheitliche Dicke besitzt, wäre es vorteilhaft, wenn wenigstens eine der beteiligten Walzen eine elastische Oberfläche hätte, die diese minimalen Toleranzen ausgleichen kann, indem die Oberfläche des Mantels sich elastisch anpasst.

In DE102005017184 A1 und in JP 2007-083577 A werden Walzen für die Kunststoffverarbeitung beschrieben, die zwischen dem metallischen Walzenkern und der metallischen Mantelschicht eine Gummilage enthalten. In DE 10046055 A1, DE 10221172 A1, EP 10024370 A1 werden elastische Walzen beschrieben, die in Papier- bzw. in Druckmaschinen eingesetzt werden. Bei allen Lösungen wird zur Erzeugung der Elastizität der Oberfläche der Walze eine Kunststoff- oder eine Gummischicht verwendet, die sich entweder direkt an der Oberfläche der Walze befindet, oder die sehr dicht unter der Oberfläche liegt. Man nimmt bei diesen Lösungen in Kauf, dass unterschiedliche Werkstoffe dauerhaft miteinander verbunden werden müssen. Weiterhin bereiten die unterschiedlichen Ausdehnungskoeffizienten erhebliche Schwierigkeiten, da sich die Walzen entweder im Betrieb selbst erwärmen oder für den Betrieb beheizt oder gekühlt werden müssen. Schließlich sind auch die elastomeren Schichten nur bedingt geeignet, um dauerhaft den Schubkräften, die im Walzenspalt herrschen, standzuhalten, oder um eine Oberflächenqualität oder eine Wärmeabfuhr von der Oberflächen der Walze zu erreichen, wie sie beispielsweise für viele Anwendungen im Bereich der Kunststoffverarbeitung gewünscht wird.

In JP 11-235747 A ist nun eine rein metallische Walze beschrieben, bei der keine Elastomerschicht notwendig ist, um die Elastizität der Walzenoberfläche zu erreichen. Bei dieser Walze ist ein dünner einwandiger metallischer Mantel auf einen steifen Walzengrundkörper aufgezogen. Der elastische Grundkörper sitzt in beiden Randberichen der Walze fest auf dem Grundkörper, während sich im Mittelbereich der Walze zwischen dem Grundkörper und dem Mantel ein Spalt befindet. Um die nötige Elastizität des Mantels zu erreichen, wird eine Verhältnis zwischen dem Radius der Walze und der Wanddicke des einwandigen Mantels von kleiner gleich 0,03 vorgeschlagen.

Bei der Auslegung solcher Walzen muss immer ein Kompromiss eingegangen werden. Einerseits muss die Walze den im Betrieb auftretenden mechanischen Belastungen standhalten, andererseits aber sollte sie gleichzeitig möglichst elastisch sein. Da man zum Erreichen der mechanischen Standfestigkeit der Walze bestimmte Wanddicken nicht unterschreiten darf sind dem Konstrukteur Grenzen hinsichtlich der Dimensionierung in Richtung einer möglichst großen Elastizität der Oberfläche der Walze gesetzt, solange der Mantel einwandig ist. Ziel der Erfindung war es nun eine Lösung zu finden, mit der man unter Beibehaltung der Standfestigkeit der Walze noch deutlich höhere Elastizitäten erreichen kann, als es mit dem Stand der Technik möglich ist.

Aufgabe der Erfindung ist es daher, rein metallische Walzen mit einer extremen Elastizität der Oberfläche herzustellen, deren elastische Verhalten vergleichbar ist mit Walzen, die eine Elastomerschicht besitzen. Die mit der Verwendung von nicht metallischen Schichten verbundenen Nachteile der geringen Flexibilität sollen überwunden werden, indem ein Weg gefunden wird, mit einer rein metallischen Walze ebenfalls die gewünschte Flexibilität der Oberfläche zu erreichen. Die Lösung dieser Aufgabe bezogen auf die Walze ist in Verbindung mit dem Oberbegriff des Anspruchs 1 dadurch gekennzeichnet, dass der Grundkörper und der Mantel aus einem Metall bestehen und dass der elastische Mantel einstückig und bereichsweise mehrwandig ist. Dies ist realisierbar, wenn der Mantel in dem Bereich, in dem er flexibel sein soll, zur Erhöhung der Flexibilität, ähnlich wie bei einer Blattfeder, mehrwandig ausgeführt wird.

Unter Beibehaltung der Wanddicke des Mantels kann die Flexibilität der Oberfläche des Mantels durch eine Variation der Anzahl der Einzelwände und durch eine Variation der Wanddicke der Einzelwände gezielt verändert werden. Es ist besonders vorteilhaft, wenn die Wanddicke mindestens einer Einzelwand kleiner als 3 mm, vorzugsweise sogar kleiner als 1 mm ist. Um im Betrieb der Walze eine Verschiebung von einzelnen Wänden relativ zueinander zu verhindern, ist es besonders vorteilhaft, wenn der Walzenmantel einstückig ist. Einstückig heißt, dass es sich bei dem Walzenmantel um ein einziges Teil handelt. Der Mantel ist also nicht durch Verbinden oder Verschweißen von Einzelteilen hergestellt. Zur Aufnahme der Kräfte im Glättspalt ist es natürlich auch vorteilhaft, wenn die Oberflächen von aneinander grenzenden Einzelwänden sich über ihre gesamte Oberfläche gegenseitig berühren. Der im Glättspalt gewünschte Effekt des elastischen Nachgebens der Walzenoberfläche ist besonders gut zu erreichen, wenn das Steifheitsverhältnis vom Mantel zum Grundkörper größer als 10 ist, vorzugsweise sogar größer als 100 ist. Eine Relativbewegung vom Mantel zum Grundkörper kann natürlich nur stattfinden, wenn zwischen dem Grundkörper und dem Mantel zumindest bereichsweise ein Spalt existiert. Dabei ist es vorteilhaft, wenn der Spalt zwischen dem Grundkörper und dem Mantel kleiner als 1 mm vorzugsweise sogar kleiner als 0,5 mm ist, damit die maximal mögliche Durchbiegung des Mantels begrenzt wird.

Die verfahrenstechnischen Möglichkeiten werden natürlich deutlich erweitert, wenn der Spalt über der Breite der Walze in Segmente aufgeteilt ist, und wenn die Segmente zur Steuerung der lokal über der Breite wirkenden Linienkraft jeweils mit einem Medium zur Druckerzeugung gefüllt sind, und oder wenn der Spalt zwischen dem Mantel und dem Grundkörper von einem Temperiermittel durchströmt und der Mantel somit gekühlt oder beheizt werden kann. Es gibt auch Anwendungen, bei denen es notwendig ist, dass sich die Biegesteifheit des Mantels über der Breite der Walze ändert, oder aber bei denen die Biegesteifheit des Mantels über der Breite regelbar ist.

Unter Verwendung der elastischen Walzen können auch vorteilhafte Glättwerke gebaut werden, bei denen mindestens eine Glättwalze erfindungsgemäß ausgebildet ist. Damit können dann Verfahren zum Glätten einer Bahn oder zur Beeinflussung einer durch einen Walzenspalt laufenden Masse realisiert werden, indem ein erfindungsgemäßes Glättwerk verwendet wird. Zum Ausgleich von verfahrensbedingten geringfügigen Dimensionsänderungen im Glättspalt ist es besonders vorteilhaft, wenn die elastische Walze federnd gelagert ist, so dass die Achse der Walze mit der elastischen Oberfläche die Spaltänderungen, die sich durch die Rundlauftoleranzen der beiden den Walzenspalt bildenden Walzen und oder durch Änderungen der Dicke der in den Spalt einlaufenden Bahn ergeben, durch eine Bewegung relativ zu der Achse der feststehenden Walze, ausgleichen kann. Besonders geringe Toleranzen können erreicht werden, wenn ein erfindungsgemäßes Glättwerk verwendet wird, und wenn die Dickenverteilung der erzeugten Platte oder Folie on-line gemessen wird, und wenn die gemessenen Werte in einem Regler mit einem vorgegebenen Sollwert verglichen werden, und wenn der Regler einen die Dicke der Schmelzebahn beeinflussenden Verfahrensparameter verstellt, um die Dickenabweichungen vom Sollwert zu minimieren. Für andere Verfahren können mit einem erfindungsgemäßen Glättwerk die lokal im Glättspalt wirkenden Kräfte dynamisch entweder auf ein vorgegebenes Maß oder aber bereichsweise auf unterschiedliche vorgegebene Kräfte eingeregelt werden.

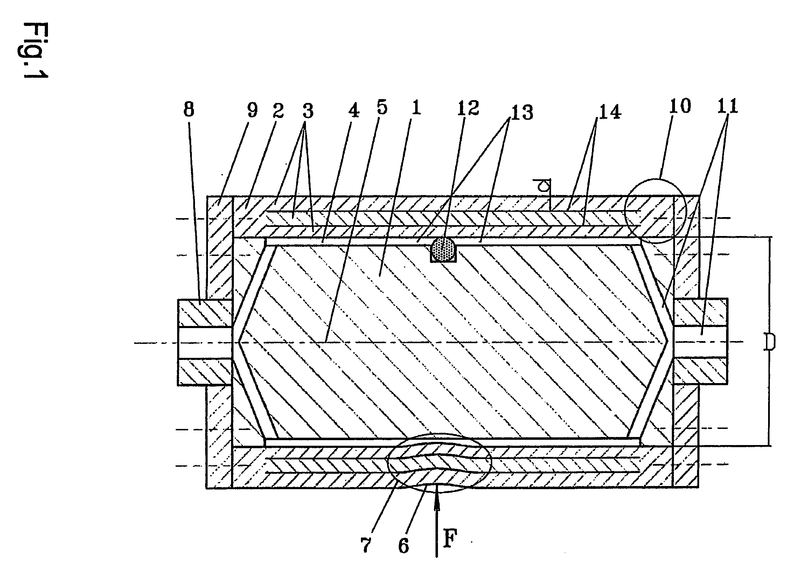

In Fig. 1 ist ein Ausführungsbeispiel einer erfindungsgemäßen, metallischen Walze mit einer elastischen Oberfläche in einer Schnittdarstellung dargestellt.

Die Walze besteht aus einem metallischen Grundkörper 1. Der Grundkörper 1 besitzt auf beiden Seiten Zapfen 8, die zur Lagerung der Walze dienen und über die das Gewicht der Walze sowie die von der Walze im Betrieb aufzunehmenden Spaltkräfte auf die Rahmenkonstruktion eines in der Figur nicht dargestellten Glättwerks übertragen werden. Auf den Grundkörper 1 ist ein ebenfalls metallischer Mantel 2 aufgeschoben, der entweder, wie in der Zeichnung durch die Mittellinien der Schrauben angedeutet, über stirnseitig angebrachte Scheiben 9 fest mit dem Grundkörper 1 verschraubt ist. Der Mantel 2 kann natürlich auch mit dem Grundkörper 1 verschweißt, auf den Grundkörper 1 aufgeschrumpft oder auf eine andere Art drehsteif mit dem Grundkörper 1 verbunden werden. Die Walze muss nicht zylindrisch sein sondern kann natürlich auch bombiert sein oder eine andere von der Zylinderform abweichende Geometrie besitzen. Die Walze hat eine Breite von größer 500 mm und besitzt Rundlauftoleranzen von kleiner 5 µm. Der Mantel 2 hat eine polierte Oberflächen mit einer Rautiefe Rt von kleiner als 0,5, bzw. mit einem Mittenrauwert Rₐ von kleiner als 0,05.

Zwischen dem Mantel 2 und dem Grundkörper 1 befindet sich ein Spalt 4. Der Spalt 4 begrenzt den maximal möglichen Deformationsweg, den der Mantel 2 ausführen kann. Die Größe des Spalts 4 kann sich je nach Aufgabenstellung vom Nanometerbereich bis in den Millimeterbereich erstrecken. Der Spalt 4 muss auch nicht ein über der Breite konstantes Maß aufweisen. Die Größe des Spalts 4 kann sich natürlich auch über der Breite der Walze ändern. Um eine große Elastizität bei einer durch die benötigte Standfestigkeit der Walze vorgegebenen Dicke erreichen zu können, ist es nun vorteilhaft, wenn der Mantel 2 zumindest bereichsweise mehrwandig ausgeführt ist. Besonders Vorteilhaft ist es dabei, wenn er einstückig ist, und trotzdem in den beiden Endbereichen 10 einwandig und in der Mitte zwischen den Endbereichen 10 mehrwandig ausgeführt ist. Je nach Anwendung kann es vorteilhaft sein, wenn sich in der Mitte mindestens zwei Einzelwände 3 oder aber eine beliebig höhere Anzahl von Einzelwänden 3 befinden. Für die Flexibilität der Walze ist es vorteilhaft, wenn die Wanddicke (d) der Einzelwände 3 kleiner 10 mm ist, Besonders vorteilhaft ist es, wenn sie sogar kleiner 1 mm ist. Die Wanddicke (d), wie auch die Anzahl der Einzelwände 3, kann über der Breite einheitlich sein, oder sich aber auch verändern, um die Flexibilität über der Breite der Walze zu verändern.

Die Oberflächen 14 von angrenzenden Einzelwänden 3 sollten sich über ihre gesamte Oberfläche 14 berühren, um eine ideale Abstützung gegeneinander zu erreichen. Über die Festlegung des Durchmessers D des Grundkörpers 1 und die Anzahl und die Dicke der Einzelwände 3 kann man das Steifheitsverhältnis zwischen dem Grundkörper 1 und dem Mantel 2 nahezu beliebig einstellen. Besonders vorteilhaft ist es, wenn es größer als 10, vorzugsweise sogar größer als 100 ist. Je nach Höhe der Kraft F, die im Walzenspalt herrscht, sollte das Verhältnis so eingestellt werden, dass beim Einwirken einer geringen Kraft auf einen lokal begrenzten Bereich der Oberfläche des Mantels, diese im Kraftangriffsbereich elastisch nachgibt, während sich die Achse 5 des Grundkörpers auf Grund der einwirkenden Kraft in erster Näherung nicht durchbiegt.

Wenn es von der Anwendung her erforderlich ist, kann die erfindungsgemäße Walze auch gekühlt oder beheizt werden. Dazu ist es vorteilhaft, wenn der Spalt 4 von einem Temperiermittel durchströmt wird. Dafür können beispielsweise in den Walzenzapfen 8 Bohrungen 11 vorgesehen sein, durch die das Temperiermedium ein- bzw. ausströmt. Um eine möglichst gleiche Temperatur auf der Oberfläche der Walze zu realisieren ist es vorteilhaft, wenn mittels einer runden, elastischen Dichtschnur 12 ein entsprechender spiralförmiger Kanal zwischen dem Grundkörper 1 und dem Mantel 2 gebildet wird.

Für einige Anwendungen ist es vorteilhaft, wenn der Spalt in einzelne Kammern 13 aufgeteilt ist, die dann über ein Medium zur Druckerzeugung zum Beispiel mittels einem Öl oder etwas ähnlichem gefüllt sind. Eine Aufteilung des Spalts 4 in einzelne abgeschlossene Kammern 13 ist wiederum in einfacher Weise realisierbar, indem man radial umlaufende elastische, ringförmige Dichtschnüre 12 verwendet, um die einzelnen Kammern zu bilden. Verbindet man nun jede einzelne Kammer 13 mit einem Druckregler, so kann man die lokal über der Breite der Walze herrschende Linienkraft einstellen oder auch regeln.

Mit der Verfügbarkeit von erfindungsgemäßen Walzen können nun völlig neue vorteilhafte Glättwerke gebaut werden, bei denen deutlich geringere Spaltkräfte verwendet werden können, ohne Gefahr zu laufen, dass die Walzenoberfläche im Walzenspalt an irgendeiner Stelle den Kontakt zur Bahn oder zur Masse verliert. Damit lassen sich nun auch vorteilhafte Verfahren zum Glätten einer Bahn oder zum Beeinflussen einer durch einen Walzenspalt laufenden Masse realisieren. Da unter Verwendung einer erfindungsgemäßen Walze nur noch sehr geringe Kräfte benötigt werden, um trotz geringer Dickenunterschiede einer durch den Glättspalt laufenden Bahn den Kontakt an keiner Stelle der Bahn zu verlieren, kann man ein Glättwerk bauen und ein Verfahren realisieren, bei dem die elastische Walze federnd gelagert ist, so dass die Achse 5 der Walze mit der elastischen Oberfläche die Spaltänderungen, die sich durch die Rundlauftoleranzen der beiden den Walzenspalt bildenden Walzen und oder durch Änderungen der Dicke der in den Spalt einlaufenden Bahn ergeben, durch eine Bewegung relativ zu der Achse 5 der feststehenden Walze, ausgleichen kann.

Man kann natürlich auch vorteilhafte Verfahren realisieren, bei denen entweder die Gesamtspaltkraft oder aber auch die lokale Spaltkraft an unterschiedlichen Stellen über der Breite des von zwei gegenläufig drehenden Walzen gebildeten Glättspalts geregelt werden kann. So kann auch die Dicke einer Bahn oder auch der Volumenstrom einer Masse, die durch einen Glättspalt läuft, entweder auf ein konstantes Maß über der Breite oder aber auch auf ein vorgegebenes Dickenprofil oder Massestromprofil über der Breite geregelt werden. Der Glättspalt muss natürlich nicht unbedingt ein konstantes Maß über der Breite besitzen. Er kann auch für Spezialanwendungen ein definiertes Profil über der Breite aufweisen, um einen gewünschten Unterschied in der Dicke der Bahn oder im Massestrom über der Breite zu erzeugen. Auch in diesem Fall kann man natürlich vorteilhaft ein Verfahren benutzen, bei dem man das vorgegebene Profil mittels einer Regelung möglichst konstant hält.

## Patentansprüche

1. Walze bestehend aus einem steifen Grundkörper (1) und einem elastischen Mantel (2), **dadurch gekennzeichnet, dass** der Grundkörper (1) und der Mantel (2) aus einem Metall bestehen und dass der elastische Mantel (2) einstückig und bereichsweise mehrwandig ist

2. Walze nach Anspruch 1 **dadurch gekennzeichnet, dass** sich zwischen dem Grundkörper (1) und dem Mantel (2) ein Spalt (4) befindet

3. Walze nach Anspruch 1 und 2 **dadurch gekennzeichnet dass** die Wanddicke (d) mindestens einer Einzelwand (3) kleiner 10 mm insbesondere aber kleiner 1 mm ist.

4. Walze nach Anspruch 1 bis 3 **dadurch gekennzeichnet, dass** die Oberflächen (14) von aneinander grenzenden Einzelwänden (3) sich über ihre gesamte Oberfläche (14) gegenseitig berühren.

5. Walze nach Anspruch 1 bis 4 **dadurch gekennzeichnet, dass** das Steifheitsverhältnis vom Mantel (2) zum Grundkörper (1) nahezu beliebig einstellbar ist, dass es aber größer als 10 ist, vorzugsweise sogar größer als 100 ist

6. Walze nach Anspruch 1 bis 5 **dadurch gekennzeichnet, dass** der Spalt (4) zwischen dem Grundkörper (1) und dem Mantel (2) kleiner als 1 mm vorzugsweise sogar kleiner als 0,5 mm ist

7. Walze nach Anspruch 1 bis 6 **dadurch gekennzeichnet, dass** der Spalt (4) über der Breite der Walze in Kammern(13) aufgeteilt ist, und dass die Kammern (13) zur Steuerung der lokal über der Breite eines Glättwerks wirkenden Linienkraft jeweils mit einem Medium zur Druckerzeugung gefüllt sind.

8. Walze nach Anspruch 1 bis 7 **dadurch gekennzeichnet, dass** die Walze von einem Temperiermittel durchflossen wird und somit auch gekühlt oder beheizt werden kann.

9. Walze nach Anspruch 1 bis 8 **dadurch gekennzeichnet, dass** sich die Biegesteifheit des Mantels (2) über der Breite der Walze ändert.

10. Walze nach Anspruch 1 bis 9 **dadurch gekennzeichnet, dass** die Biegesteifheit des Mantels (2) über der Breite regelbar ist

11. Glättwerk bestehend aus mindestens zwei Glättwalzen **dadurch gekennzeichnet, dass** mindestens eine Glättwalze nach einem der Ansprüche 1 bis 10 ausgebildet ist

12. Verfahren zum Glätten einer Bahn oder zur Beeinflussung einer durch einen Walzenspalt laufenden Masse **dadurch gekennzeichnet, dass** ein Glättwerk nach Anspruch 11 verwendet wird.

13. Verfahren zum Glätten einer Bahn oder zur Beeinflussung einer durch einen Walzenspalt laufenden Masse nach Anspruch 12 **dadurch gekennzeichnet, dass** die Walze mit der elastischen Oberfläche federnd gelagert ist so dass die Achse 5 der Walze mit der elastischen Oberfläche die Spaltänderungen, die sich durch die Rundlauftoleranzen der beiden den Walzenspalt bildenden Walzen und oder durch Änderungen der Dicke der in den Spalt einlaufenden Bahn ergeben, durch eine Relativbewegung der Achsen der beiden Walzen, ausgleichen kann.

14. Verfahren zum Glätten einer Bahn oder zur Beeinflussung einer durch einen Walzenspalt laufenden Masse nach Anspruch 12 oder 13, **dadurch gekennzeichnet, dass** die Dickenverteilung einer erzeugten Platte oder Folie on-line gemessen wird, und dass die gemessenen Werte in einem Regler mit einem vorgegebenen Sollwert verglichen werden, und das der Regler einen die Dicke der Bahn beeinflussenden Verfahrensparameter verstellt, um die Dickenabweichungen vom Sollwert in der Platte oder Folie zu minimieren.

15. Verfahren zum Glätten einer Bahn oder zur Beeinflussung einer durch einen Walzenspalt laufenden Masse nach einem der Ansprüche 12 bis 14, **dadurch gekennzeichnet, dass** die lokal im Glättspalt wirkende Kraft (F) dynamisch entweder auf ein vorgegebenes Maß oder aber bereichsweise auf unterschiedliche vorgegebene Kräfte (F) eingeregelt wird.

## Claims

1. Roller consisting of a rigid base body (1) and an elastic sleeve, **characterized in that** the base body (1) and the sleeve (2) consist of a metal and **in that** the elastic sleeve (2) is formed in one piece and is regionally multi-walled.

2. Roller according to Claim 1, **characterized in that** a gap (4) is located between the base body (1) and the sleeve (2).

3. Roller according to Claims 1 and 2, **characterized in that** the wall thickness (d) of at least one single wall (3) is smaller than 10 mm, but in particular smaller than 1 mm.

4. Roller according to Claims 1 to 3, **characterized in that** the surfaces (14) of single walls (3) which are adjacent to one another are in contact with one another over their entire surface (14).

5. Roller according to Claims 1 to 4, **characterized in that** the stiffness ratio of sleeve (2) to base body (1) is almost infinitely adjustable, but that it is greater than 10, preferably even greater than 100.

6. Roller according to Claims 1 to 5, **characterized in that** the gap (4) between the base body (1) and the sleeve (2) is smaller than 1 mm, preferably even smaller than 0.5 mm.

7. Roller according to Claims 1 to 6, **characterized in that** the gap (4) is subdivided into compartments (13) across the width of the roller, and **in that**, for the purpose of controlling the linear force which acts locally across the width of a calender, the compartments (13) are each filled with a medium for pressure generation.

8. Roller according to Claims 1 to 7, **characterized in that** the roller is flowed through by a temperature control medium and can in this way also be cooled or heated.

9. Roller according to Claims 1 to 8, **characterized in that** the flexural rigidity of the sleeve (2) changes across the width of the roller.

10. Roller according to Claims 1 to 9, **characterized in that** the flexural rigidity of the sleeve (2) is adjustable across the width.

11. Calender consisting of at least two calendar rollers, **characterized in that** at least one calender roller is formed according to one of Claims 1 to 10.

12. Method for smoothing a web or for influencing a mass which runs through a roller gap, **characterized in that** a calender according to Claim 11 is used.

13. Method for smoothing a web or for influencing a mass which runs through a roller gap according to Claim 12, **characterized in that** the roller having the elastic sleeve is resiliently mounted, such that the axle 5 of the roller having the elastic surface can balance out the gap variations, which result from the concentricity tolerances of the two rollers which form the roller gap and/or from variations in the thickness of the web entering the gap, by a relative movement of the axles of the two rollers.

14. Method for smoothing a web or for influencing a mass which runs through a roller gap according to Claim 12 or 13, **characterized in that** the thickness distribution of a produced sheet or film is measured online, and **in that** the measured values are compared in a controller with a preset nominal value, and **in that** the controller adjusts a parameter which influences the thickness of the web in order to minimize the deviations in thickness from the nominal value in the sheet or film.

15. Method for smoothing a web or for influencing a mass which runs through a roller gap according to one of Claims 12 to 14, **characterized in that** the force (F) acting locally in the calender gap is dynamically adjusted either to a preset value or else regionally to different preset forces (F).

## Revendications

1. Rouleau composé d'un corps de base rigide (1) et d'une enveloppe élastique (2), **caractérisé en ce que** le corps de base (1) et l'enveloppe (2) sont constitués d'un métal et **en ce que** l'enveloppe élastique (2) est en une seule pièce et localement à parois multiples.

2. Rouleau selon la revendication 1, **caractérisé en ce qu'**il se trouve une fente (4) entre le corps de base (1) et l'enveloppe (2).

3. Rouleau selon la revendication 1 ou 2, **caractérisé en ce que** l'épaisseur de paroi (d) d'au moins une paroi individuelle (3) est inférieure à 10 mm, en particulier inférieure à 1 mm.

4. Rouleau selon une revendication 1 à 3, **caractérisé en ce que** les surfaces (14) de parois individuelles (3) adjacentes l'une à l'autre se touchent mutuellement sur toute leur surface (14).

5. Rouleau selon une revendication 1 à 4, **caractérisé en ce que** le rapport de rigidité de l'enveloppe (2) par rapport au corps de base (1) est pratiquement réglable à volonté, **en ce qu'**il est néanmoins supérieur à 10, et de préférence même supérieur à 100.

6. Rouleau selon une revendication 1 à 5, **caractérisé en ce que** la fente (4) entre le corps de base (1) et l'enveloppe (2) est inférieure à 1 mm, de préférence même inférieure à 0,5 mm.

7. Rouleau selon une revendication 1 à 6, **caractérisé en ce que** la fente (4) est divisée en chambres (13) sur la largeur du rouleau, et **en ce que** les chambres (13) sont respectivement remplies d'un fluide pour produire une pression afin de commander la force linéique agissant localement sur la largeur d'une calandre.

8. Rouleau selon une revendication 1 à 7, **caractérisé en ce que** le rouleau est parcouru par un agent d'équilibrage de température et peut ainsi être aussi bien refroidi que chauffé.

9. Rouleau selon une revendication 1 à 8, **caractérisé en ce que** la rigidité à la flexion de l'enveloppe (2) varie sur la largeur du rouleau.

10. Rouleau selon une revendication 1 à 9, **caractérisé en ce que** la rigidité à la flexion de l'enveloppe (2) est réglable sur la largeur.

11. Calandre composée d'au moins deux rouleaux de satinage, **caractérisée en ce qu'**au moins un rouleau de satinage est formé selon une des revendications 1 à 10.

12. Procédé pour calandrer une bande ou pour influencer une masse circulant à travers une emprise de rouleaux, **caractérisé en ce que** l'on utilise une calandre selon la revendication 11.

13. Procédé pour calandrer une bande ou pour influencer une masse circulant à travers une emprise de rouleaux selon la revendication 12, **caractérisé en ce que** le rouleau avec l'enveloppe élastique est supporté de manière élastique, de telle manière que l'axe 5 du rouleau avec la surface élastique puisse compenser les variations de fente, qui sont dues à des tolérances de rotation des deux rouleaux formant l'emprise de rouleaux et/ou à des variations de l'épaisseur de la bande s'engageant dans la fente, par un mouvement relatif des axes des deux rouleaux.

14. Procédé pour calandrer une bande ou pour influencer une masse circulant à travers l'emprise de rouleaux selon la revendication 12 ou 13, **caractérisé en ce que** l'on mesure en ligne la répartition de l'épaisseur d'une plaque ou d'une feuille produite, et **en ce que** l'on compare les valeurs mesurées dans un régulateur avec une valeur de consigne prédéterminée, et **en ce que** le régulateur règle un paramètre du procédé influençant l'épaisseur de la bande, afin de minimiser les variations d'épaisseur dans la plaque ou la feuille par rapport à la valeur de consigne.

15. Procédé pour calandrer une bande ou pour influencer une masse circulant à travers une emprise de rouleaux selon l'une des revendications 12 à 14, **caractérisé en ce que** la force (F) agissant localement dans la fente de calandrage est régulée de façon dynamique soit sur une mesure prédéterminée soit localement sur des forces prédéterminées différentes (F).
